# EUROPEAN PATENT SPECIFICATION

(11) **EP 4 370 973 B1**
(45) Date of publication and mention of the grant of the patent: **23.07.2025**
(21) Application number: 22741523.9
(22) Date of filing: 12.07.2022
(51) Int. Cl.: G02F 1/1516, G02F 1/153, G02F 1/163, G06F 3/041, G06F 3/044, A63F 13/00

(54) **TOUCH ELECTROCHROMIC DISPLAY**
BERÜHRUNGSEMPFINDLICHE ELEKTROCHROME ANZEIGE
AFFICHEUR TACTILE ÉLECTROCHROMIQUE

(30) Priority: 12.07.2021 EP 21184964
(43) Date of publication of application: 22.05.2024
(73) Proprietor: RISE Research Institutes of Sweden AB, 501 15 Borås (SE)
(72) Inventor: ANDERSSON ERSMAN, Peter, 612 40 Finspång (SE); HOLGERSSON, Philip, 421 39 Västra Frölunda (SE)
(74) Representative: Brann AB
(86) International application number: PCT/EP2022/069417
(87) International publication number: WO 2023/285438

(56) References cited:
- US-A1- 2009 262 085
- US-A1- 2014 307 302
- US-A1- 2019 310 730
- US-A1- 2020 269 760

## Description

### Technical field

The present disclosure relates to an electrochromic display device comprising a set of pixel cells, each pixel cell being arranged to display at least one symbol, which symbol is repeatedly switchable between an on-state and an off-state, the device further comprising a circuitry configured to detect a change in capacitance in at least one pixel cell and to switch a subset of pixel cells between an on-state and an off-state, or between an off-state and an on-state, in response to said change in capacitance exceeding a predetermined threshold.

### Background

In organic electrochromic displays, a persistent change of color in an organic electrochromic material is obtained in response to an electrical stimulus. A layer of electrolyte is sandwiched between the electrochromic material and a counter electrode. Upon applying a voltage between the electrochromic layer and the counter electrode, the electrochromic layer switches between an oxidized and a reduced state, resulting in a change of color in the electrochromic material. Organic electrochromic displays are low-powered and can be printed on a flexible substrate, making possible a wide range of applications, including smart labels, medical devices, and sensor panels. Such an organic electrochromic display is disclosed in US2014307302 A1.

In many applications, an interface with the user is provided by membrane switches. These are cost-effective and provide some benefits such as being sealed, giving potential resistance to elements and ease of cleaning, for example. However, membrane switches rely on a mechanical displacement to bring two conducting surfaces in contact and are therefore prone to wear. Adding touch sensing capability to an electrochromic display would remove the mechanical wear, thus providing a more reliable device. In addition, using the display itself as a touch sensor would allow for a wider range of interaction between a user and the device.

An electrochromic display device with touch functionality is disclosed in US2009262085 A1. An electrochromic mirror with a capacitive touch sensor is disclosed in US2020269760 A1. And a liquid crystal display with touch detection function is disclosed in US2019310730 A1.

### Summary of the invention

In light of the above, there is a need for a simple device combining an electrochromic display with a touch sensing capability. It is an object of the present disclosure to provide such a device.

The invention is defined by the appended independent claim, with embodiments being set forth in the appended dependent claims, in the following description, and in the drawings.

According to an aspect of the inventive concept, there is provided an electrochromic display device comprising a set of pixel cells, each pixel cell being arranged to display at least one symbol, which at least one symbol is repeatedly switchable between an on-state and an off-state or between two different visually detectable colouring states. The on-state and the off-state have two different visually detectable colouring states, Each pixel cell comprises:
- a first layer comprising electrochromic and electrochemically active organic polymer material being electrochemically switchable between said two different visually detectable colouring states,
- a counter electrode comprising an electrically conductive material,
- an electrolyte layer, which electrolyte is arranged spatially between, and in ionic contact with, said first layer and said counter electrode,
- a symbol defining layer which is electronically and ionically insulating, arranged in direct contact with said first layer, and which symbol defining layer comprises one or more openings defining the shape of said symbol, wherein said electrolyte layer fills said openings of said symbol defining layer,
- a pair of connectors, each connector in electronic contact with a respective one of said first layer and said counter electrode,
said counter electrodes of said set of pixel cells are electrically separated from each other.

The device further comprises a circuitry in electronic contact with each connector in said pair of connectors of each pixel cell of said set of pixel cells, which circuitry is configured to be connected to a power supply, and which circuitry is further configured to selectively provide a respective potential difference between said pair of connectors of each pixel cell in said set of pixel cells at least when connected to said power supply.

Said circuitry is further configured to detect a change in capacitance in at least one pixel cell of said set of pixel cells, said change in capacitance being caused by an external object in close proximity to said at least one pixel cell, and switch a subset of pixel cells of said set of pixel cells between one of said on-state and said off-state, and the other of said on-state and said off-state, in response to said change in capacitance exceeding a predetermined threshold, by providing said respective potential difference between each one of said pair of connectors of said subset of pixel cells. In other words, in response to said change in capacitance exceeding a predetermined threshold, the circuitry is configured to switch a subset of pixel cells of said set of pixel cells between said on-state and said off-state, or vice-versa. Consequently, in response to said change in capacitance exceeding a predetermined threshold, the circuitry is configured to switch a subset of pixel cells of said set of pixel cells between said on-state and said off-state, or between said off-state and said on-state.

The present disclosure is at least partially based on the realization that the manufacturing time and/or cost can be lowered if the first layer and counter electrode layer/counter electrode/counter electrodes are used for detecting a user interaction. Compared to a device in which one or more devices and/or dedicated layer is necessary for detecting user interaction, a device according to the present invention can be manufactured using fewer processing steps.

In essence, the invention provides a display that can be controlled by an external object, such as a finger of a user, a stylus pen for touch screens, or any other conductive object.

According to one embodiment, said circuitry is configured to detect said change in capacitance in said at least one pixel cell via at least one of said pair of connectors of said set of pixel cells.

A portion of each connector in said pair of connectors may be in direct contact with a respective one of said first layer and said counter electrode.

According to one example said change in capacitance is detected by continuously or intermittent monitoring or measuring the potential of only one of said connectors in said pair of connectors, or a property corresponding to the potential of only one of said connectors in said pair of connectors. According to an alternative example said change in capacitance is detected by continuously or intermittent monitoring or measuring the respective potential of both of said connectors in said pair of connectors, or a property corresponding to the respective potential of both of said connectors in said pair of connectors, such as the potential difference between said pair of connectors.

Said change in capacitance may be detected by continuously or intermittent monitoring or measuring the potential of only one of said first layer and said counter electrode of at least one pixel, or a property corresponding to the potential and/or capacitance of only one of said first layer and said counter electrode of at least one pixel. According to an alternative example said change in capacitance is detected by continuously or intermittent monitoring or measuring the respective potential of both said first layer and said counter electrode of at least one pixel, or a property corresponding to the respective potential and/or capacitance of both of said first layer and said counter electrode of at least one pixel, such as the potential difference or capacitance between first layer and said counter electrode.

According to one embodiment, said subset of pixel cells may consist of a single pixel cell. In one example configuration, a change in capacitance may be detected in one pixel cell, in response to which said one pixel cell is switched between said off-state and said on-state (or vice versa). Alternatively, a change in capacitance may be detected in a first pixel cell, in response to which a second pixel cell is switched between said off-state and said on-state, which second pixel cell is different from said first pixel cell.

According to one embodiment, said subset of pixel cells may comprise a plurality of pixel cells, such as two, three or more pixel cells. In such a configuration, a plurality of pixel cells may be switched between said off-state and said on-state in response to detecting said change in capacitance. The plurality of pixel cells may comprise the at least one pixel cell in which the change in capacitance is detected. Alternatively, the plurality of pixel cells may comprise only pixel cells in which a change in capacitance is not detected.

A wide range of different interactions is thus possible, from a simple switch of a pixel cell in response to a touch, to complex rule-based interactions. It should be noted that a change in capacitance detected in a particular pixel cell may result in different subsets of pixel cells being switched, depending on the current state of each pixel cell in the set of pixel cells.

According to one embodiment, said set of pixel cells comprises a plurality of pixel cells, which plurality of pixel cells is divided or grouped into at least a first group of pixel cells and optionally a second group of pixel cells. Each first layer in said first group of pixel cells forms a respective portion of a respective continuous layer, which respective continuous layer extends between at least two neighboring pixel cells in said first group of pixel cells. Said connector in electronic contact with said first layer of said pixel cells of said first group of pixel cells is optionally one and the same for said at least two neighboring pixel cells between which said respective continuous layer extends.

The respective first layers of the pixel cells of said second group are electrically separated from each other. Each said connector in electronic contact with said first layer of the pixel cells of said second group is a separate connector.

In this configuration, the at least two neighboring pixel cells in said first group of pixel cells act as one capacitive touch sensor. The pixel cells can thus be grouped into different touch areas. A change in capacitance may be detected anywhere in the at least two neighboring pixel cells. Each of the at least two neighboring pixel cells is however independently switchable between the on-state and the off-state.

According to one embodiment, said first group of pixel cells comprises all pixel cells in said plurality of pixel cells, and all of the first layers in said first group of pixel cells form a respective portion of the same continuous layer, which continuous layer continuously extends between all pixel cells in said plurality of pixel cells. Said connector in electronic contact with said first layer is preferably one and the same for all pixel cells in said plurality of pixel cells.

This provides a device with fewer connectors, thus minimizing a number of electric conductors needed to connect said circuitry with said connectors. It allows for configurations in which a response may be triggered indifferently by a change in capacitance in any one of the pixel cells of the plurality of pixel cells, but each pixel cell of the plurality of pixel cells is independently switchable between the on-state and the off-state.

According to one embodiment, said set of pixel cells comprises a plurality of pixel cells, and the respective first layers of said plurality of pixel cells are electrically separated from each other. Each said connector in electronic contact with said first layer of each pixel cell is a separate connector.

In this configuration, each one of said plurality of pixel cells is directly and individually addressable both in terms of detecting a change of capacitance in each pixel cell and in terms of switching each pixel cell between the on-state and the off-state.

According to one embodiment, for each pixel cell of said set of pixel cells, a first terminal and a second terminal of said circuitry are electronically connected to one connector of said pair of connectors of said pixel cell, said first terminal being connected to said one connector via a resistor. Said circuitry is configured to execute the following steps:
(a) at a first instance in time t₀: provide a first potential to said second terminal and a second potential, different from said first potential, to said first terminal,
(b) measure the potential at said second terminal while maintaining said second potential at said first terminal,
(c) determine an elapsed time T between the first instance in time t₀ and a second instance in time t₁, at which second instance in time t₁ the measured potential at said second terminal reaches a predetermined third potential, said third potential being different from said first and second potential and within the interval between said first and second potential.

Said change in capacitance exceeding a predetermined threshold is detected or determined based on said elapsed time T exceeding a predetermined time threshold.

In relation to this disclosure, the term "provide" a potential comprises applying the potential, at this instant, or having previously applied and since then maintained said potential. In other words, in step (a), at a first instance in time t₀, the potential at said second terminal is the first potential and the potential at said first terminal is the second potential. It does not exclude that the first and/or the second potential was/were applied to said second and/or first terminal before said first instance in time t₀.

When the electrochromic display device is in a sense mode, the circuitry may be configured to execute the steps (a) to (c) repeatedly, at a chosen frequency. This allows the circuitry to monitor the capacitance of each pixel cell.

According to a general example, the measured time corresponds to the time constant of an RC circuit formed by the connection between the circuitry, the resistor, and the pixel cell acting as a capacitor. An external object, such as a user's finger, in close proximity of the pixel cell, forms a combined capacitor with the pixel cell, increasing its capacitance. The time constant of the RC circuit, i.e. the time required to charge (or discharge) the capacitor thus increases.

The change in capacitance is determined to exceed said predetermined threshold, indicating that said change in capacitance in said pixel cell is caused by an external object in close proximity to said pixel cell, e.g. based on a difference between said determined elapsed time T and a baseline interval exceeding a predetermined time difference. The baseline interval corresponds to small changes in capacitance.

Additionally, this configuration allows the sensitivity of the touch sensor to be adjusted by choosing an appropriate resistance value of the resistor. As an example, a resistor in the range of 100 kOhm to 50 MOhm may be used. A higher resistance provides higher sensitivity (i.e. a change in capacitance is detected at a greater distance between e.g. a finger and the pixel cell) but a slower response time.

According to one embodiment, said circuitry is further configured to process said determined time, for each pixel cell of said set of pixel cells, and to determine, based on said processed determined time, whether a change in capacitance in a pixel cell exceeds said predetermined threshold.

The measured time may be processed by applying a filter to the measured time data in order to reduce the effect of disturbances. As an example, the filter may consist in calculating an exponential moving average of a derivative of the measured time. The resulting processed measured time may provide more reliable data for correctly identifying a change in capacitance resulting from a touch (or object such as a finger in close proximity to) in a pixel cell.

According to one embodiment, the one connector of said pair of connectors of said pixel cell is the connector in electronic contact with the first layer of said pixel cell.

According to one embodiment, the one connector of said pair of connectors of said pixel cell is the connector in electronic contact with the counter electrode of said pixel cell.

Thus, different options for connecting the circuitry to said pixel cell are possible, allowing the most appropriate connection to be chosen according to the layout of the pixel cell. For example, depending on the shape of the first layer and of the counter electrode layer/counter electrode of said pixel cell, a connection to one or the other layer may minimize the number of conductors crossing the different layers. This reduces the potential sources of disturbance and provides for more reliable sensing.

According to one embodiment, each respective one connector of at least two pixel cells are all connected to a common first terminal and a respective separate second terminal of said circuitry.

This configuration decreases the number of pins needed in said circuitry. Additionally, fewer conductors are needed to connect the pixel cells to the circuitry, thus reducing the potential sources of disturbances.

According to one embodiment, said circuitry comprises one of a microcontroller and a Field Programmable Gate Array (FPGA). Additionally or alternatively, the circuitry comprises a circuit adapted to apply a potential, measure a potential, and measure time. The choice of circuitry can for example be adapted to the layout of the device, the number of pixel cells and the complexity of the intended interaction between a user and the device.

According to one embodiment, said power supply comprises one of a battery, a solar cell, a supercapacitor, a USB-connection from another device, a wall socket. An appropriate power supply can thus be chosen depending on the expected power consumption of the device, whether the device needs to be portable, how long time the device needs to be able to operate.

According to one embodiment, said first layer comprises a material selected from a group comprising: Poly(3,4-ethylenedioxythiophene) doped with poly(styrenesulfonic acid) (PEDOT:PSS), polythiophenes, polyaniline, polypyrrole, and PEDOT deposited through vapor phase polymerization on a pre-deposited oxidant, and/or a combination thereof.

According to one embodiment, said counter electrode layer or counter electrode comprises a material selected from a group comprising: PEDOT:PSS and carbon.

According to one embodiment, said pair of connectors comprises a material selected from a group comprising: silver, PEDOT:PSS, and carbon.

Further, the "first" layer in relation to this invention is an electrochromic layer composed of one material or a combination of materials. The material(s) may be organic or inorganic, molecular or polymeric. Such an electrochromic layer, independent of whether it is composed of one material or is an ensemble of more than one material, combines the following properties: at least one material is electrically conducting in at least one oxidation state, and at least one material is electrochromic, i.e. exhibits colour change as a result of electrochemical redox reactions within the material, such as e.g. a reduction reaction in the electrochromic layer.

The electrochromic display device may comprise, as electrochromic material and/or electrochemically active material, a polymer which is electrically conducting in at least one oxidation state, and optionally also comprises a polyanion compound.

Electrochromic polymers for use in the electrochromic display device of the invention are for example selected from the group consisting of electrochromic polythiophenes, electrochromic polypyrroles, electrochromic polyanilines, electrochromic polyisothianaphthalenes, electrochromic polyphenylene vinylenes and copolymers thereof. In an embodiment, the electrochromic polymer is a homopolymer or copolymer of a 3,4-dialkoxythiophene, in which said two alkoxy groups may be the same or different or together represent an optionally substituted oxy-alkylene-oxy bridge. In yet an embodiment, the electrochromic polymer is a homopolymer or copolymer of a 3,4-dialkoxythiophene selected from the group consisting of poly(3,4-methylenedioxythiophene), poly(3,4-methylenedioxythiophene) derivatives, poly(3,4-ethylenedioxythiophene), poly(3,4-ethylenedioxythiophene) derivatives, poly(3,4-propylenedioxythiophene), poly(3,4-propylenedioxythiophene) derivatives, poly(3,4- butylenedioxythiophene), poly(3,4-butylenedioxythiophene) derivatives, and copolymers therewith. The polyanion compound is then preferably poly(styrene sulfonate).

As is readily appreciated by the skilled man, in alternative embodiments of the invention, the electrochromic material comprises any non-polymer material, combination of different non-polymer materials, or combination of polymer materials with non-polymer materials, which exhibit conductivity in at least one oxidation state as well as electrochromic behaviour. For example, one could use a composite of an electrically conducting material and an electrochromic material, such as electrically conductive particles such as tin oxide, ITO or ATO particles with polymer or non-polymer electrochromic materials such as polyaniline, polypyrrole, polythiophene, nickel oxide, polyvinylferrocene, polyviologen, tungsten oxide, iridium oxide, molybdenum oxide and Prussian blue (ferric ferrocyanide). As non-limiting examples of electrochromic elements for use in the device of the invention, mention can be made of: a piece of PEDOT:PSS, being electrochromic as well as both electrically and ionically conducting; a piece of PEDOT:PSS with Fe2+ /SCN-, PEDOT:PSS being conducting and electrochromic as mentioned above and Fe2+ /SCN- being an additional electrochromic component (see below); a piece composed of a continuous network of conducting ITO particles in an insulating polymeric matrix, in direct electrical contact with an electrochromic WO3-coating; a piece composed of a continuous network of conducting ITO particles in an insulating polymeric matrix, in contact with an electrochromic component dissolved in an electrolyte. As described above, an electrochromic display device may comprise a further electrochromic material for realization of displays with more than one colour. This further electrochromic material can be provided within the electrochromic pixel element or the solidified electrolyte, which then for example comprises an electrochromic redox system, such as the redox pair of colourless Fe2+ and SCN-ions on one hand, and of red Fe3+ (SCN)(H2O)5 complex on the other. By way of further, non-limiting example, such materials may be selected from different phenazines such as DMPA - 5, 10-dihydro-5,10-dimethylphenazine, DEPA - 5, 10-dihydro-5,10-diethylphenazine and DOPA - 5, 10-dihydro-5,10-dioctylphenazine, from TMPD - N,N,N',N'-tetramethylphenylenediamine, TMBZ - N,N,N',N'-tetramethylbenzidine, TTF - tetrathiafulvalene, phenanthroline-iron complexes, erioglaucin A, diphenylamines, pethoxychrysoidine, methylene blue, different indigos and phenosafranines, as well as mixtures thereof.

The electrodes, counter electrodes and/or the pair of connectors may comprise any electron conducting material, such as electrically conducting polymers, metal, conducting carbon, titanium, platinum, graphite, graphene, noble metals and inert metals or combinations of such electron conductive materials. The electrodes may further comprise electrochemically inert metals such as gold or other conducting materials suitable for being in contact with electrochemically active layers. Normally, conducting material suitable for being in contact with electrochemically active layers is inert such that they do not give rise to substantial electrochemical reactions. These materials may e.g. be provided as an ink or paste which is arranged on an insulating film during a manufacturing, or pre-manufacturing process.

The pair of connectors may alternatively or additionally comprise silver.

A more complete discussion of possible materials and processing steps is provided in WO 2013/068185 on pages 17-28.

### Definitions

Direct electrical contact: Direct physical contact (common interface) between two phases (for example between electrochemically active organic material and electrolyte) that allows for the exchange of charges through the interface. Charge exchange through the interface can comprise transfer of electrons between electrically conducting phases, transfer of ions between ionically conducting phases, or conversion between electronic current and ionic current by means of electrochemistry at an interface between for example counter element and electrolyte or electrolyte and electrochromic element, or by occurrence of capacitive currents due to the charging of the Helmholtz layer at such an interface.

Ionic contact between two elements is provided by at least one material capable of transporting ions between the two elements. An electrolyte, in direct contact (common interface) with a first and a second electrochemically active layer, is one example of a material which may provide ionic contact between the two electrochemically active layers. The electrolyte may hence be referred to as being in ionic contact with the two electrochemically active layers.

Two materials may be in electronic contact with each other, e.g. via a third material. Electronic contact between two elements is provided by at least one material capable of transporting electrons between the two elements. A layer of carbon, in direct contact (common interface) with a first and a second electrochemically active layer, is one example of a material which may provide electronic contact between the two layers. The layer of carbon may hence be referred to as an electronic conductor, or electronically conductive.

Direct physical contact: Common interface between two materials or layers.

### Brief description of the drawings

The inventive concept, some non-limiting embodiments and further advantages will now be further described with reference to the drawings, in which:
- Fig. 1: is a schematic illustration in exploded perspective view of layers comprised in a pixel cell of one example embodiment,
- Fig. 2: is a schematic illustration of two electrochromic displays connected to a microcontroller,
- Fig. 3: is a flow chart illustrating an algorithm used to determine the capacitance in a pixel cell.
- Figs. 4a-f: are schematic illustrations of layers comprised in an example embodiment,
- Fig. 5: is a schematic illustration of the alignment of the layers of Figs. 4d&f,
- Fig. 6: is a diagram showing the measured capacitance in three pixel cells,
- Figs. 7a-f: are schematic illustrations of layers comprised in an example embodiment comprising a plurality of pixel cells,
- Fig. 8: is a schematic illustration of an electrochromic display comprising the layers of Figs. 7a-f in use.

### Description

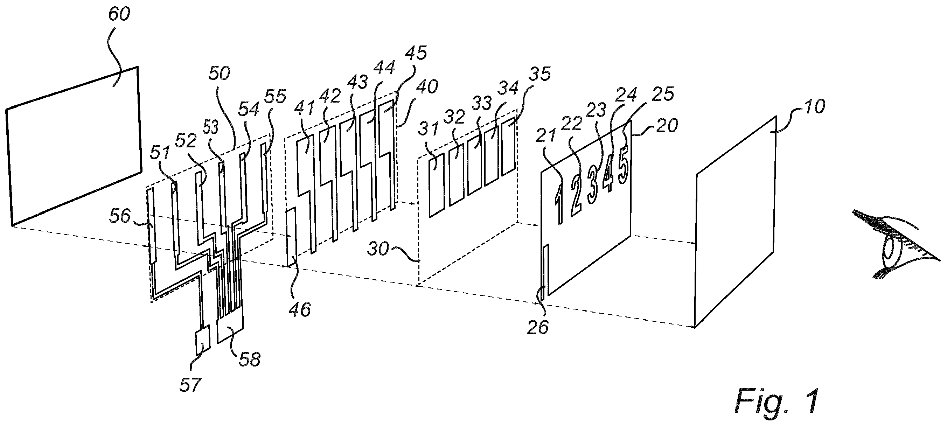

Fig. 1 is schematic illustration, in exploded view, of the different layers comprised in a pixel cell of one example embodiment of the electrochromic display device. A transparent substrate (not shown in Fig. 1) is first provided. In order of printing, the following layers are then arranged on the substrate:
- a first layer 10 of electrochromic and electrochemically active organic polymer,
- a symbol defining layer 20,
- an electrolyte layer 30,
- a counter electrode layer 40,
- a silver pattern layer 50,
- an optional protective layer 60.

The electrochromic material of the first layer 10 is preferably PEDOT:PSS. Alternatively, the first layer 10 may for example comprise polythiophenes, polyaniline, polypyrrole, or PEDOT deposited through vapor phase polymerization on a pre-deposited oxidant.

The symbol defining layer 20, which is electronically and ionically insulating, is arranged in direct contact with the first layer 10. The symbol defining layer comprises openings 21, 22, 23, 24, 25 defining the shape of symbols that are to be displayed. Here, each symbol takes the shape of a number from "1" to "5". An additional opening 26 is provided for facilitating electronic contact with the first layer 10.

The electrolyte layer 30 comprises five portions 31, 32, 33, 34, 35, each portion completely filling a respective opening 21, 22, 23, 24, 25 of the symbol defining layer 20, such that each portion is in ionic contact with the first layer 10 underneath. The five portions 31, 32, 33, 34, 35 of the electrolyte layer 30 are ionically isolated from each other.

As seen in Fig 1. each counter electrode 41, 42, 43, 44, 45 may form a respective portion of a counter electrode layer 40, which counter electrode layer is discontinuous as the counter electrodes are electrically separated from each other.

The counter electrode layer 40 comprises five counter electrodes 41, 42, 43, 44, 45 arranged on top of and covering a respective portion 31, 32, 33, 34, 35 of the electrolyte layer 30. Here, each counter electrode 41, 42, 43, 44, 45 is provided with an elongated portion extending beyond or outside the respective portions of the electrolyte layer 30. An additional electrode referred to as the pixel electrode 46 is printed as part of the counter electrode layer 40. The pixel electrode is aligned with the additional opening 26 of the symbol defining layer 20, such that the pixel electrode is in electronic contact with the first layer 10.

An optional silver pattern layer 50 is printed on top of the counter electrode layer 40. The silver pattern 50 facilitates electronic contact between the counter electrode layer 40 and the circuitry (not shown in Fig. 1) used to control the electrochromic display device. The silver pattern layer 50 comprises a pair of connectors 57, 58. The first connector 57 is connected to a silver wire 56 aligned with the pixel electrode 46 of the counter electrode layer 40. The circuitry, when connected to the first connector 57, is thus in electronic contact with the first layer 10 via the pixel electrode 46. The second connector 58 is connected to five silver wires 51, 52, 53, 54, 55 each aligned with the elongated portion of a respective counter electrode 41, 42, 43, 44, 45. The circuitry, when connected to the second connector 58, is thus in electrical contact with each of the five portions 31, 32, 33, 34, 35 of the electrolyte layer 30 via the respective counter electrodes.

In an alternative, a separate connector could be provided for each counter electrode 41, 42, 43, 44, 45, instead of a common connector 58. The circuitry could then be connected to each separate connector to provide electrical contact with each of the five portions 31, 32, 33, 34, 35 of the electrolyte layer 30 via the respective counter electrodes.

An electrochromic display device comprising a pixel cell as illustrated in Fig. 1 operates by applying an electric potential difference across the electrolyte layer 30. A first potential is applied to the first layer 10, via the first connector 57, and a second potential is applied to the counter electrode layer 40, via the second connector 58. The difference in potential creates an electric field in the electrolyte layer 30, which initiates a reduction or oxidation of a portion of the first layer 10 in contact with the electrolyte layer 30. In turn, this causes a color change of the portion of the first layer 10. Depending on the oxidized or reduced state of the first layer 10, the symbols are in an off-state (no coloration, symbols not visible) or in an on-state (coloration, symbols visible).

As seen in Fig. 1 the first layer of each pixel cell is a respective portion of the continuous layer shown in Fig. 1 between the symbol defining layer and the eye.

The working principle of such an electrochromic display device is described in further detail in WO 2013/068185. This arrangement of the different layers as outlined above also corresponds in principle to what is described in further details in WO 2013/068185.

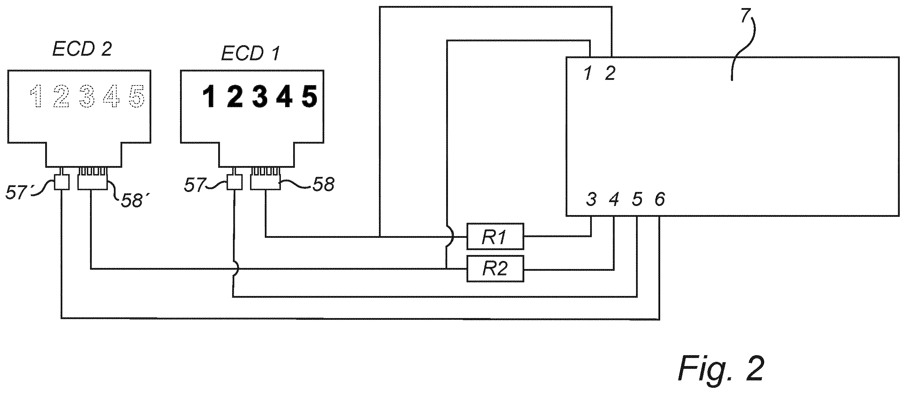

Fig. 2 shows two separate electrochromic displays ECD1, ECD2, each comprising the layers illustrated in Fig. 1. Each display ECD1, ECD2 thus comprises one pixel cell with five symbols in the shape of the numbers "1" to "5". The pixel cell of the first display ECD1 is in the on-state, with the symbols colored and visible to an observer. In contrast, the pixel cell of the second display ECD2 is in the off-state. The outline of the symbols is shown on the second display ECD2 for illustrative purposes.

The respective connectors 57, 58, 57', 58' of each display are connected to a circuitry in the form of a microcontroller 7. In this configuration, each pixel cell is connected to three different terminals of the microcontroller 7. The connector 57 associated with the pixel electrode (not shown in Fig. 2; corresponding to 46 in Fig. 1) of the first display ECD1 is connected to terminal 5 of the microcontroller. This terminal can be referred to as the Common Pin for ECD 1. The connector 58 associated with the counter electrodes (not shown in Fig. 2; corresponding to 41, 42, 43, 44, 45 in Fig. 1) is connected to terminals 2 and 3 of the microcontroller 7, and between terminal 3 and connector 58 there is a resistor R1. Terminal 3 can be referred to as the Send Pin and terminal 2 can be referred to as the Receive Pin for ECD1.

The second display ECD2 is correspondingly connected to the microcontroller 7, such that the first connector 57' is connected to terminal 6 of the microcontroller 7, and the second connector 58' is connected to terminal 1 and terminal 4 of the microcontroller, and between terminal 4 and connector 58' there is a resistor R2. Terminal 6 can be referred to as the Common Pin for ECD 2, whereas terminals 1 and 4 can be referred to as the Receive Pin and the Send Pin for ECD2, respectively.

Alternative connections between the connectors 57, 58, 57', 58' of the pixel cells of the displays ECD1 and ECD2 and the microcontroller 7 are possible. For example, the connector 57, 57' corresponding to the pixel electrode may be connected to a Send Pin/Receive pair of pins of the microcontroller 7, in which case the connector 58, 58' corresponding to the counter electrodes is connected to the Common Pin.

In another alternative, the Send pin is shared between the pixel cells of the two displays ECD1 and ECD2, meaning that the second connector 58, 58' of each pixel cell is connected, via a respective resistor R1, R2, to the same terminal of the microcontroller 7. The respective second connector 58, 58' is connected to a respective Receive Pin of the microcontroller 7. The first connector 57, 57' of each respective pixel cell is connected to a respective Common Pin of the microcontroller 7. This configuration, sharing a Send Pin between several pixel cells, reduces the total number of terminals needed on the microcontroller 7 from 3N to 2N+1, where N is the number of pixel cells.

The shared Send Pin configuration may also alternatively be connected such that the respective first connectors 57, 57' is connected to the shared Send Pin and a respective Receive Pin, while the respective second connector 58, 58' is connected to a respective Common Pin of the microcontroller 7.

It should be noted that the pixel cells of the two displays ECD1 and ECD2 could alternatively be printed on a common substrate, thus forming a single display with two pixel cells. In such a configuration, the same connection between the pixel cells and the microcontroller 7 as described above could be used.

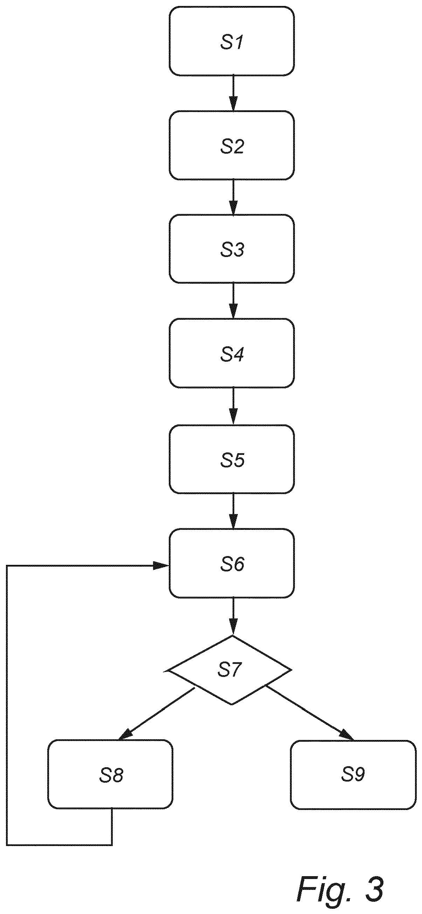

In use, the capacitance in a pixel cell is measured, in arbitrary units, by calculating the time it takes for the Receive pin to go from a LOW state to a HIGH state. This is achieved e.g. according to an algorithm illustrated in the flow chart of Fig. 3, in which the steps consist in:
- Step S1: set the Receive pin 1, 2 to OUTPUT;
- Step S2: set the Receive pin 1, 2 to LOW;
- Step S3: set the Receive pin 1, 2 to INPUT;
- Step S4: set the Send pin 3, 4 to OUTPUT;
- Step S5: set the Send pin 3, 4 to HIGH;
- Step S6: read the Receive pin 1, 2;
- Step S7: determine if the Receive pin 1, 2 is HIGH. If yes, go to Step S8; if no, go to Step S9;
- Step S8: increment a capacitance variable, go to Step S6;
- Step S9: return capacitance variable.

In read mode the microcontroller determines the electric potential at the pin as a HIGH state or LOW state depending on the size thereof.

If an external object, such as a human finger, is in close proximity to a pixel cell, the object forms a capacitor in combination with the layers of the pixel cell. In this condition, the time required to change the state of the Receive pin 1, 2 from LOW to HIGH increases, resulting in a higher value of the capacitance variable returned. In practice, the algorithm described above is performed repeatedly, such that a signal consisting of successive values of the capacitance variable is obtained. A change in capacitance is thus determined when a difference in the time needed to change the state of the Receive pin 1, 2 from LOW to HIGH exceeds a predetermined threshold.

An alternative algorithm, in which the time required to change the state of the Receive pin 1, 2 from HIGH to LOW is measured, can be used to the same effect.

Depending on the actual configuration of the display device, the capacitance value signal may be affected by noise or disturbances. A potential source of disturbance is, for example, in a display comprising several pixel cells, conductors of the silver pattern layer overlapping different pixel cells. Switching one pixel cell between the off-state and the on-state can then affect the capacitance value signal of another pixel cell, even in the absence of a touch. Further, a finger in proximity to one pixel cell could potentially affect the capacitance value signal of another pixel cell having an associated conductor overlapping the former pixel cell. Care should therefore be taken when designing a display device to minimize such overlaps. The capacitance value signal can be also filtered in order to remove potential noise or disturbances and make the determination that a change in capacitance is e.g. due to an actual touch by a user more reliable. As a non-limiting example, the signal may be subjected to an Exponential Moving Average filter.

The sensitivity of the touch sensor formed by each pixel cell is also determined by the resistance of the respective resistor R1, R2. The appropriate choice of resistor may depend both on the desired sensitivity (e.g. distance at which a touch is registered) and on the specific microcontroller used. As an example, resistors of 5.6 MOhm have been used with an Arduino Mega2560 microcontroller and resistors of 460 kOhm have been used with an Arduino UNO microcontroller. Resistors in the range of 100 kOhm to 50 MOhm may be used. Depending on the application, the resistor may be a commercially available resistor, or the resistor may be printed when printing the display.

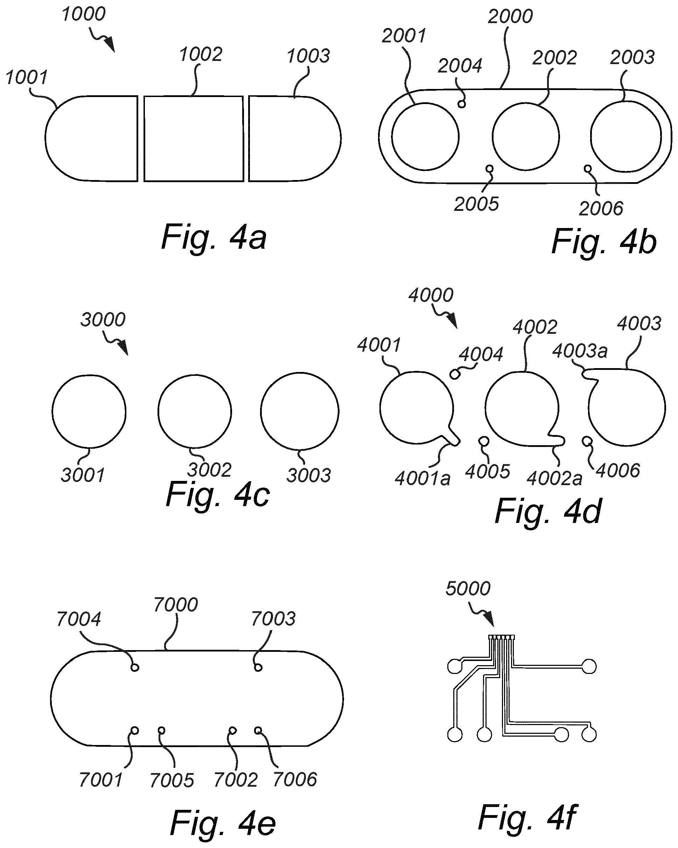

Figs. 4a-f show six layers of an electrochromic display comprising three pixel cells, one by one, according to the following print order:
- Fig. 4a: First layer of electrochromic material (PEDOT:PSS) 1000,
- Fig. 4b: Symbol defining layer 2000,
- Fig. 4c: Electrolyte layer 3000,
- Fig. 4d: Counter electrode layer 4000,
- Fig. 4e: Insulating layer with electronic vias 7000,
- Fig. 4f: Silver pattern layer 5000.

The first layer 1000 shown in Fig. 4a comprises three physically separate electrochromic segments 1001, 1002, 1003. The symbol defining layer 2000 (Fig. 4b) is arranged in direct contact with the first layer 1000. Three circular openings 2001, 2002, 2003 are vertically aligned with a respective segment 1001, 1002, 1003 of the first layer 1000, defining one circular symbol for each pixel cell of the device. Three small openings 2004, 2005, 2006 are respectively arranged in proximity to the circular openings 2001, 2002, 2003, such that each small opening 2004, 2005, 2006 is vertically aligned with the same segment 1001, 1002, 1003 of the first layer 1000 as the circular opening 2001, 2002, 2003 in proximity to which it is arranged.

The third layer is the electrolyte layer 3000 (Fig. 4c), which comprises three circular electrolyte islands 3001, 3002, 3003, corresponding to the circular shapes defined by the symbol defining layer 2000. Each electrolyte island 3001, 3002, 3003 fills its respective corresponding opening 2001, 2002, 2003 of the symbol defining layer completely.

Fig. 4d shows the counter electrode layer 4000, comprising three counter electrodes 4001, 4002, 4003, and three pixel electrodes 4004, 4005, 4006. The counter electrodes are aligned with the openings of the symbol defining layer 2000 and the respective electrolyte islands 3001, 3002, 3003. Each counter electrode has a generally circular shape corresponding to the shape of the symbol, with a respective protruding connection point 4001a, 4002a, 4003a. The pixel electrodes 4004, 4005, 4006 are aligned with the small openings 2004, 2005, 2006 of the symbol defining layer 2000.

The insulating layer 7000 (Fig. 4e) has openings 7001-7006 respectively aligned with the connection points 4001a, 4002a, 4003a of the counter electrodes 4001, 4002, 4003, and the pixel electrodes 4004, 4005, 4006. Each opening 7001-7006 thus provides an electronic via for electronic contact to an electrode.

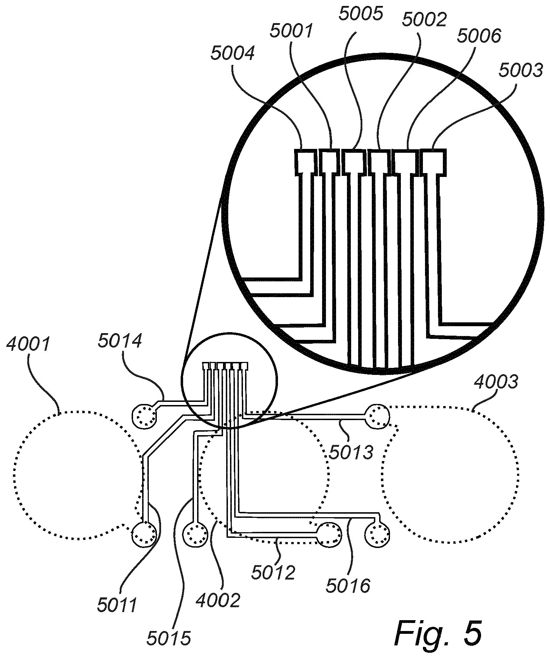

Fig. 4f shows the silver pattern layer 5000 that facilitates the connection between the circuitry (not shown in Figs. 4a-f) and the pixel cells. The silver pattern layer is also shown in Fig. 5, where a portion of the layer 5000 has been magnified. The silver pattern layer has a total of six connectors 5001-5006, each with a silver conductor reaching a position on the silver pattern layer 5000 corresponding to an opening 7001-7006 of the insulating layer 7000. An outline of the counter electrode layer 4000 is also shown in Fig. 5 to illustrate the alignment of silver pattern layer 5000 with the counter electrode layer 4000.

In this device, each respective first layer 1001, 1002, 1003 of the three pixel cells thus has its own connector. The pixel cells can be connected to a circuitry (not shown in Figs. 4a-f) for detecting a change in capacitance in the pixel cells, and for applying a potential difference to the pixel cells for switching the state of the symbols, according to any of the configurations described in connection to Fig. 2.

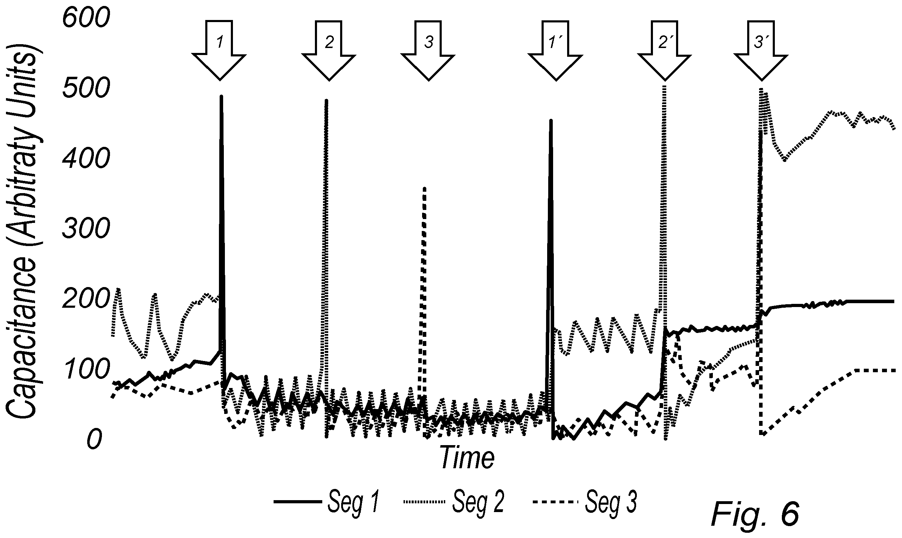

Fig. 6 shows a diagram of the measured capacitance in the three pixel cells of the device described in connection to Figs. 4a-f and 5. The plots marked Seg 1, Seg 2, and Seg 3 correspond respectively to the left, middle, and right pixel cell as shown in Figs. 4a-f. There are six clear peaks in the diagram, which are marked with arrows 1, 2, 3, 1', 2', 3'. Each peak corresponds to a touch on one of the pixel cells, in the following order:
- Arrow 1: touch on Seg 1, Seg 1 switched from off-state to on-state;
- Arrow 2: touch on Seg 2, Seg 2 switched from off-state to on-state;
- Arrow 3: touch on Seg 3, Seg 3 switched from off-state to on-state;
- Arrow 1': touch on Seg 1, Seg 1 switched from on-state to off-state;
- Arrow 2': touch on Seg 2, Seg 2 switched from on-state to off-state;
- Arrow 3': touch on Seg 3, Seg 3 switched from on-state to off-state.

This experiment clearly shows that the capacitance in a pixel cell increases in response to a touch. In general, the measured capacitance in pixel cells that are not subjected to a touch stays within a low baseline interval. It should be noted, however, that some disturbances are present. In particular, the measured capacitance in Seg 2 increases sharply at arrow 3', i.e. when Seg 3 is touched. This may be due to the fact that the silver conductors 5013 and 5016, connecting the counter electrode 4003 and the pixel electrode 4006 of the rightmost pixel cell overlap with the middle pixel cell, as illustrated in Fig. 5.

Accordingly, it may be advantageous to arrange the different layers of an electrochromic display device to avoid or minimize any overlap between conductors associated with one pixel cell and other pixel cells.

Additionally, the capacitance data shown in Fig. 6 may be filtered to make it easier to correctly identify a touch on the respective pixel cells. As an example, an exponential moving average can be computed on the derivative of the measured capacitance of each pixel cell. Many different methods of filtering the data are possible.

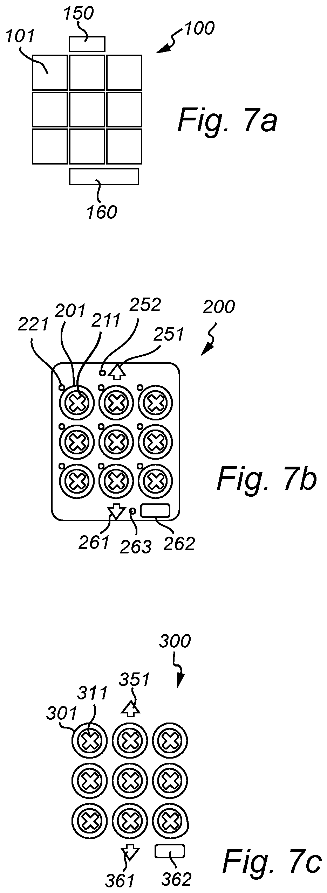

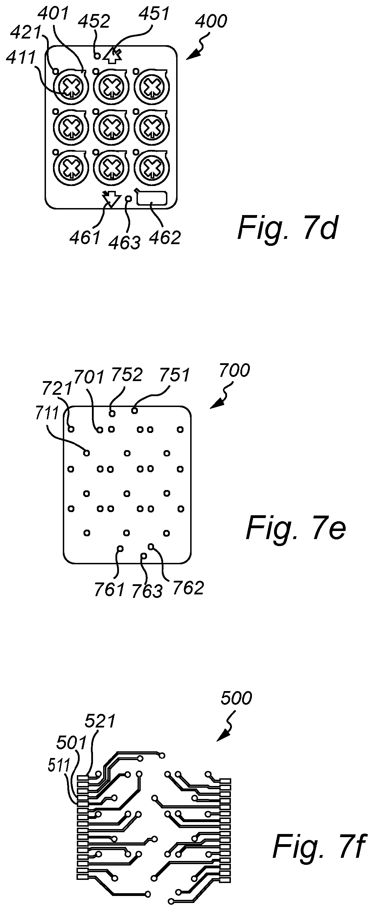

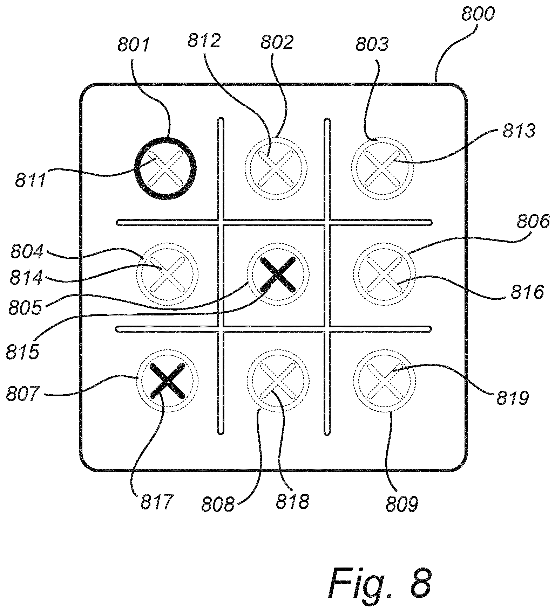

An example of a more advanced type of user interaction made possible by the present disclosure is illustrated in Figs. 7 and 8, which show an embodiment of an electrochromic display device 800 arranged to provide a game of Tic-Tac-Toe playable by touching the display to turn on the noughts and crosses.

The device 800 comprises a total of 21 pixel cells printed on the same substrate. 18 of the pixel cells, corresponding to the nine noughts and the nine crosses, are arranged in a 3x3 grid. In Figs. 7a-f, six layers 100, 200, 300, 400, 500, 700 of the display are shown, one by one, according to the following print order:
- Fig. 7a: First layer 100 of electrochromic material (PEDOT:PSS),
- Fig. 7b: Symbol defining layer 200,
- Fig. 7c: Electrolyte layer 300,
- Fig. 7d: Counter electrode layer 400,
- Fig. 7e: Insulating layer with electronic vias 700,
- Fig. 7f: Silver pattern 500.

The first layer 100 shown in Fig. 7a comprises a total of eleven physically separate electrochromic segments. Nine segments are arranged in a 3x3 grid of equal size square segments. For clarity of the illustration, of these nine segments, only the top-left segment 101 is labeled. A tenth 150 and eleventh 160 electrochromic segment is located on opposite sides of the 3x3 grid.

The symbol defining layer 200 (Fig. 7b) is arranged in direct contact with the first layer 100. An opening in the shape of the cross 211, surrounded by an opening in the form of a circle (nought) 201, is aligned with each segment 101 of the 3x3 grid of the first layer 100. There are thus nine crosses 211 and nine circles 201, giving a total of 18 different symbols. In proximity to each circle 201 is a small opening 221 providing an electronic via, facilitating electronic contact with the corresponding segment 101 of the first layer 100. An opening defining an upward pointing arrow symbol 251 and a small opening 252 are aligned with segment 150 of the first layer 100. An opening defining a downward pointing arrow 261, an additional rectangular opening 262, and a small opening 263 are aligned with segment 160 of the first layer.

The third layer is the electrolyte layer 300 (Fig. 7c), which is separated into 18 electrolyte islands 301, 311, corresponding to the circle 201 and cross 211 shapes of the symbol defining layer 200, and three additional electrolyte islands in the shape of an upward-pointing arrow 351, a downward pointing arrow 361, and a rectangle 362, corresponding to the opening 251, 261 and 262 of the symbol defining layer, respectively. Each electrolyte island fills its corresponding opening of the symbol defining layer 200 completely.

Fig. 7d shows the counter electrode layer 400. It comprises 18 counter electrodes with shapes corresponding to the symbols, i.e. nine counter electrodes generally shaped as a cross 411 and nine counter electrodes generally shaped as a circle 401. A pixel electrode 421 is located in proximity to each circle shaped counter electrode 401, aligned with a corresponding opening 221 of the symbol defining layer 200. The pixel electrode 421 facilitates electronic contact with the first layer 100. Additionally, the counter electrode layer 400 comprises counter electrodes in the shape of an upward pointing arrow 451, a downward pointing arrow 461, and a rectangle 462, as well as two pixel electrodes 452, 463.

The insulating layer 700 (Fig. 7e) has openings 701, 711, 721, 751, 752, 761, 762, 763 aligned with a connection point of each one of the counter electrodes 401, 411, 451, 461, 462 and pixel electrodes 421, 452, 463. Each opening thus provides an electronic via for electronic contact to an electrode.

Fig. 7f shows the silver pattern layer 500 that facilitates the connection between the circuitry (not shown in Figs. 7a-f) and the pixel cells. There are a total of 32 connectors, each with a silver conductor reaching a position on the layer 500 corresponding to an opening of the insulating layer 700. For example, connectors 501, 511 and 521 provide a connection to the circle-shaped counter electrode 401, the cross-shaped counter electrode 411, and the pixel electrode 421 of the counter electrode layer.

In this configuration, the potential applied to each counter electrode and to each pixel electrode can thus be individually controlled. The nine circle symbols, the nine cross symbols, the arrows and the rectangle can consequently be individually turned on or off.

It should be noted that among the 18 pixel cells corresponding to the circles and crosses, each of the nine pairs of circles and crosses in the 3x3 grid is two pixel cells sharing a common first layer.

The pixel cells can be connected to a circuitry, for detecting a change in capacitance in the pixel cells, and for applying a potential difference to the pixel cells for switching the state of the symbols, according to any of the configurations described in connection to Fig. 2.

Fig. 8 is an illustration of the device 800, in top view, in use, i.e. during a game of Tic-Tac-Toe. For the purposes of the illustration, an outline of each pixel cell, i.e. of each circle 801-809 and of each cross 811-819, is shown. Three cells are in the "on" state: the cross 817 in the lower-left corner of the grid, the cross 815 in the center of the grid, and the circle 801 in the upper-left corner of the grid. As seen in Fig 8 The on-state and the off-state have two different visually detectable colouring states, the on-state may e.g. be more coloured and/or more opaque compared to the off-state. A first player has thus pressed on the display 800 to turn on one of the crosses 815 or 817, followed by a second player having pressed the display to turn on the circle 801, and the first player having pressed on the second cross 815 or 817. In the state shown, it is the turn of the second player to press on one of the remaining squares of the game grid.

In use, the device 800 thus detects a touch (or an object in close proximity) of one of the nine squares of the game grid, and one of the symbols (circle 801-809 or cross 811-819) of that square is turned on, depending on which player's turn it is.

With each pixel cell connected to a circuitry (not shown in Fig. 8) according to a configuration as outlined in connection with Fig. 2, the circuitry can determine a capacitance value signal for each of the 18 pixel cells. As noted above, each pair of circle and cross, e.g. 801 and 811, is two pixel cells sharing a common first layer. It may be difficult to differentiate, in reading the respective capacitance value signals, between a touch of the circle and of the cross. However, a simple processing of the circuitry, keeping track of which player is playing the current turn, allows the correct symbol to be turned on.

The person skilled in the art realizes that the present invention by no means is limited to the embodiments described above. The features may be combined in different ways, and many modifications and variants are possible within the scope of the appended claims. In the claims, any reference signs placed in parenthesis shall not be construed as limiting the claim. The word "comprising" does not exclude the presence of other elements than those listed in the claim. The word "a" or "an" preceding an element does not exclude the presence of a plurality of such elements.

## Claims

1. An electrochromic display device comprising a set of pixel cells, each pixel cell being arranged to display at least one symbol, which at least one symbol is repeatedly switchable between an on-state and an off-state, which on-state and off-state have two different visually detectable colouring states, wherein each pixel cell comprises:
a first layer (10) comprising electrochromic and electrochemically active organic polymer material being electrochemically switchable between said two different visually detectable colouring states,
a counter electrode (40) comprising an electrically conductive material
an electrolyte layer (30), which electrolyte is arranged spatially between, and in ionic contact with, said first layer and said counter electrode,
a symbol defining layer (20) which is electronically and ionically insulating arranged in direct contact with said first layer, and which symbol defining layer comprises one or more openings defining the shape of said symbol, wherein said electrolyte layer fills said openings of said symbol defining layer,
a pair of connectors (57, 58), each connector in electronic contact with a respective one of said first layer and said counter electrode,
wherein said counter electrodes of said set of pixel cells are electrically separated from each other, and
the device further comprises:
a circuitry in electronic contact with each connector in said pair of connectors of each pixel cell of said set of pixel cells, which circuitry is configured to be connected to a power supply, and which circuitry is further configured to selectively provide a respective potential difference between said pair of connectors of each pixel cell in said set of pixel cells at least when connected to said power supply,
wherein said circuitry is further configured to
detect a change in capacitance in at least one pixel cell of said set of pixel cells, said change in capacitance being caused by an external object in close proximity to said at least one pixel cell, and
switch a subset of pixel cells of said set of pixel cells between one of said on-state and said off-state and the other of said on-state and said off-state, in response to said change in capacitance exceeding a predetermined threshold, by providing said respective potential difference between each one of said pair of connectors of said subset of pixel cells.

2. The device according to claim 1, wherein said circuitry is configured to detect said change in capacitance in said at least one pixel cell via at least one of said pair of connectors of said set of pixel cells.

3. The device according to claim 1 or 2, wherein
said set of pixel cells comprises a plurality of pixel cells, which plurality of pixel cells is grouped into at least a first group of pixel cells and optionally a second group of pixel cells,
each first layer in said first group of pixel cells forms a respective portion of a respective continuous layer, which respective continuous layer extends between at least two neighbouring pixel cells in said first group of pixel cells;
said connector in electronic contact with said first layer of said pixel cells of said first group of pixel cells is optionally one and the same for said at least two neighbouring pixel cells between which said respective continuous layer extends,
the respective first layers of the pixel cells of said second group are electrically separated from each other,
each said connector in electronic contact with said first layer of the pixel cells of said second group is a separate connector.

4. The device according to claim 3, wherein
said first group of pixel cells comprises all pixel cells in said plurality of pixel cells, and all of the first layers in said first group of pixel cells form a respective portion of the same continuous layer, which continuous layer continuously extends between all pixel cells in said plurality of pixel cells;
said connector in electronic contact with said first layer is preferably one and the same for all pixel cells in said plurality of pixel cells.

5. The device according to claim 1 or 2, wherein
said set of pixel cells comprises a plurality of pixel cells, and
the respective first layers of said plurality of pixel cells are electrically separated from each other, and
each said connector in electronic contact with said first layer of each pixel cell is a separate connector.

6. The device according to any one of the preceding claims, wherein:
for each pixel cell of said set of pixel cells, a first terminal and a second terminal of said circuitry are electronically connected to one connector of said pair of connectors of said pixel cell, said first terminal being connected to said one connector via a resistor, and
said circuitry is configured to:
at a first instance in time t₀, provide a first potential to said second terminal and a second potential, different from said first potential, to said first terminal,
measure the potential at said second terminal while maintaining said second potential at said first terminal,
determine an elapsed time T between the first instance in time t₀ and a second instance in time t₁, at which second instance in time t₁ the measured potential at said second terminal reaches a predetermined third potential, said third potential being different from said first and second potential and within the interval between said first and second potential,
whereby said change in capacitance exceeding a predetermined threshold is detected based on said elapsed time T exceeding a predetermined time threshold.

7. The device according to claim 6, wherein said circuitry is further configured to:
process said determined time, for each pixel cell of said set of pixel cells,
determine, based on said processed determined time, whether a change in capacitance in a pixel cell exceeds said predetermined threshold.

8. The device according to any one of claims 6 or 7, wherein the one connector of said pair of connectors of said pixel cell is the connector in electronic contact with the first layer of said pixel cell.

9. The device according to any one of claims 6 or 7, wherein the one connector of said pair of connectors of said pixel cell is the connector in electronic contact with the counter electrode of said pixel cell.

10. The device according to any one of claims 6 to 9, wherein each respective one connector of at least two pixel cells are all connected to a common first terminal and a respective separate second terminal of said circuitry.

11. The device according to any one of the preceding claims, wherein said circuitry comprises one of a microcontroller and a Field Programmable Gate Array (FPGA).

12. The device according to any one of the preceding claims, wherein said power supply comprises one of a battery, a solar cell, a supercapacitor, a USB-connection from another device, a wall socket.

13. The device according to any one of the preceding claims, wherein
said first layer comprises a material selected from a group comprising: Poly(3,4-ethylenedioxythiophene) doped with poly(styrenesulfonic acid) (PEDOT:PSS), polythiophenes, polyaniline, polypyrrole, and PEDOT deposited through vapor phase polymerization on a pre-deposited oxidant, and/or a combination thereof.

14. The device according to any one of the preceding claims, wherein said counter electrode comprises a material selected from a group comprising: PEDOT:PSS and carbon.

15. The device according to any one of the preceding claims, wherein said pair of connectors comprises a material selected from a group comprising: silver, PEDOT:PSS, and carbon.

## Patentansprüche

1. Elektrochrome Anzeigevorrichtung, die einen Satz von Pixelzellen umfasst, wobei jede Pixelzelle angeordnet ist, um mindestens ein Symbol anzuzeigen, wobei das mindestens eine Symbol wiederholt zwischen einem Ein-Zustand und einem Aus-Zustand umschaltbar ist, wobei der Ein-Zustand und Aus-Zustand zwei unterschiedliche visuell erfassbare Färbungszustände aufweisen, wobei jede Pixelzelle Folgendes umfasst:
eine erste Schicht (10), die elektrochromes und elektrochemisch aktives organisches Polymermaterial umfasst, das elektrochemisch zwischen den beiden unterschiedlichen visuell erfassbaren Färbungszuständen umschaltbar ist,
eine Gegenelektrode (40), die ein elektrisch leitfähiges Material umfasst
eine Elektrolytschicht (30), wobei der Elektrolyt räumlich zwischen der ersten Schicht und der Gegenelektrode angeordnet ist und damit in ionischem Kontakt steht,
eine symboldefinierende Schicht (20), die elektronisch und ionisch isolierend ist, die in direktem Kontakt mit der ersten Schicht angeordnet ist, und wobei die symboldefinierende Schicht eine oder mehrere Öffnungen umfasst, die die Form des Symbols definieren, wobei die Elektrolytschicht die Öffnungen der symboldefinierenden Schicht füllt,
ein Paar Verbinder (57, 58), wobei jeder Verbinder in elektronischem Kontakt mit einer jeweiligen der ersten Schicht und der Gegenelektrode steht,
wobei die Gegenelektroden des Satzes von Pixelzellen elektrisch voneinander getrennt sind, und
die Vorrichtung weiter Folgendes umfasst:
eine Schaltungsanordnung in elektronischem Kontakt mit jedem Verbinder in dem Paar von Verbindern jeder Pixelzelle des Satzes von Pixelzellen, wobei die Schaltungsanordnung dazu konfiguriert ist, mit einer Stromversorgung verbunden zu sein, und wobei die Schaltungsanordnung weiter dazu konfiguriert ist, selektiv eine jeweilige Potenzialdifferenz zwischen dem Paar von Verbindern jeder Pixelzelle in dem Satz von Pixelzellen mindestens dann bereitzustellen, wenn sie mit der Stromversorgung verbunden ist,
wobei die Schaltungsanordnung weiter dazu konfiguriert ist, eine Kapazitätsänderung in mindestens einer Pixelzelle des Satzes von Pixelzellen zu erfassen, wobei die Kapazitätsänderung durch ein externes Objekt in unmittelbarer Nähe der mindestens einen Pixelzelle veranlasst wird, und
und eine Teilmenge von Pixelzellen des Satzes von Pixelzellen zwischen dem Ein-Zustand und dem Aus-Zustand oder dem anderen von Ein-Zustand und dem Aus-Zustand als Reaktion darauf umzuschalten, dass die Kapazitätsänderung durch Bereitstellen der jeweilige Potenzialdifferenz zwischen jedem des Paares von Verbindern der Teilmenge von Pixelzellen einen vorbestimmten Schwellenwert überschreitet.

2. Vorrichtung nach Anspruch 1, wobei die Schaltungsanordnung dazu konfiguriert ist, die Kapazitätsänderung in der mindestens einen Pixelzelle über mindestens einen des Paares von Verbindern des Satzes von Pixelzellen zu erfassen.

3. Vorrichtung nach Anspruch 1 oder 2, wobei
der Satz von Pixelzellen eine Vielzahl von Pixelzellen umfasst, wobei die Vielzahl von Pixelzellen in mindestens eine erste Gruppe von Pixelzellen und optional eine zweite Gruppe von Pixelzellen gruppiert ist,
jede erste Schicht in der ersten Gruppe von Pixelzellen einen jeweiligen Abschnitt einer jeweiligen kontinuierlichen Schicht bildet, wobei sich die jeweilige kontinuierliche Schicht zwischen mindestens zwei benachbarten Pixelzellen in der ersten Gruppe von Pixelzellen erstreckt;
wobei der Verbinder in elektronischem Kontakt mit der ersten Schicht der Pixelzellen der ersten Gruppe von Pixelzellen optional ein und derselbe für die mindestens zwei benachbarten Pixelzellen ist, zwischen denen sich die jeweilige durchgehende Schicht erstreckt,
die jeweiligen ersten Schichten der Pixelzellen der zweiten Gruppe elektrisch voneinander getrennt sind,
jeder Verbinder in elektronischem Kontakt mit der ersten Schicht der Pixelzellen der zweiten Gruppe ein separater Verbinder ist.

4. Vorrichtung nach Anspruch 3, wobei
die erste Gruppe von Pixelzellen alle Pixelzellen in der Vielzahl von Pixelzellen umfasst und alle ersten Schichten in der ersten Gruppe von Pixelzellen einen jeweiligen Abschnitt der gleichen kontinuierlichen Schicht bilden, wobei sich die kontinuierliche Schicht kontinuierlich zwischen allen Pixelzellen in der Vielzahl von Pixelzellen erstreckt;
der Verbinder in elektronischem Kontakt mit der ersten Schicht bevorzugt ein und derselbe für alle Pixelzellen in der Vielzahl von Pixelzellen ist.

5. Vorrichtung nach Anspruch 1 oder 2, wobei
der Satz von Pixelzellen eine Vielzahl von Pixelzellen umfasst, und
die jeweiligen ersten Schichten der Vielzahl von Pixelzellen elektrisch voneinander getrennt sind, und
jeder Verbinder in elektronischem Kontakt mit der ersten Schicht jeder Pixelzelle ein separater Verbinder ist.

6. Vorrichtung nach einem der vorstehenden Ansprüche, wobei:
für jede Pixelzelle des Satzes von Pixelzellen eine erste Klemme und eine zweite Klemme der Schaltungsanordnung elektronisch mit einem Verbinder des Paares von Verbindern der Pixelzelle verbunden ist, wobei die erste Klemme über einen Widerstand mit dem einen Verbinder verbunden ist, und
die Schaltungsanordnung dazu konfiguriert ist:
zu einem ersten Zeitpunkt t₀ der zweiten Klemme ein erstes Potenzial bereitzustellen, und der ersten Klemme ein zweites Potenzial, das sich von dem ersten Potenzial unterscheidet, bereitzustellen,
das Potenzial an der zweiten Klemme zu messen, während das zweite Potenzial an der ersten Klemme aufrechterhalten wird,
eine verstrichene Zeit T zwischen dem ersten Zeitpunkt t₀ und einem zweiten Zeitpunkt t₁ zubestimmen, wobei zu dem zweiten Zeitpunkt t₁ das gemessene Potenzial an der zweiten Klemme ein vorbestimmtes drittes Potenzial erreicht, wobei sich das dritte Potenzial von dem ersten und dem zweiten Potenzial unterscheidet, und innerhalb des Intervalls zwischen dem ersten und dem zweiten Potenzial liegt,
wobei die Kapazitätsänderung, die einen vorbestimmten Schwellenwert überschreitet, basierend auf der verstrichenen Zeit T, die einen vorbestimmten Zeitschwellenwert überschreitet, erfasst wird.

7. Vorrichtung nach Anspruch 6, wobei die Schaltungsanordnung weiter dazu konfiguriert ist:
die bestimmte Zeit für jede Pixelzelle des Satzes von Pixelzellen zu verarbeiten,
basierend auf der verarbeiteten bestimmten Zeit zu bestimmen, ob eine Kapazitätsänderung in einer Pixelzelle den vorbestimmten Schwellenwert überschreitet.

8. Vorrichtung nach einem der Ansprüche 6 oder 7, wobei der eine Verbinder des Paares von Verbindern der Pixelzelle der Verbinder ist, der in elektronischem Kontakt mit der ersten Schicht der Pixelzelle steht.

9. Vorrichtung nach einem der Ansprüche 6 oder 7, wobei der eine Verbinder des Paares von Verbindern der Pixelzelle der Verbinder ist, der mit der Gegenelektrode der Pixelzelle in elektronischem Kontakt steht.

10. Vorrichtung nach einem der Ansprüche 6 bis 9, wobei jeder jeweilige Verbinder von mindestens zwei Pixelzellen mit einer gemeinsamen ersten Klemme und einer jeweiligen separaten zweiten Klemme der Schaltungsanordnung verbunden ist.

11. Vorrichtung nach einem der vorstehenden Ansprüche, wobei die Schaltungsanordnung ein Mikrokontroller oder ein feldprogrammierbares Gate-Array (FPGA) umfasst.

12. Vorrichtung nach einem der vorstehenden Ansprüche, wobei die Stromversorgung eines von einer Batterie, einer Solarzelle, einem Superkondensator, einer USB-Verbindung von einer anderen Vorrichtung, eine Wandsteckdose umfasst.

13. Vorrichtung nach einem der vorstehenden Ansprüche, wobei die erste Schicht ein Material umfasst, das aus einer Gruppe ausgewählt ist, die Folgendes umfasst:
mit Poly(styrolsulfonsäure) dotiertes Poly(3,4-ethylendioxythiophen) (PEDOT:PSS), Polythiophene, Polyanilin, Polypyrrol und PEDOT, abgeschieden durch Dampfphasenpolymerisation auf einem zuvor abgeschiedenen Oxidationsmittel, und/oder eine Kombination davon.

14. Vorrichtung nach einem der vorstehenden Ansprüche, wobei die Gegenelektrode ein Material umfasst, das aus einer Gruppe ausgewählt ist, die Folgendes umfasst: PEDOT:PSS und Kohlenstoff.

15. Vorrichtung nach einem der vorstehenden Ansprüche, wobei das Paar von Verbindern ein Material umfasst, das aus einer Gruppe ausgewählt ist, die Folgendes umfasst: Silber, PEDOT:PSS, und Kohlenstoff.

## Revendications

1. Dispositif d'affichage électrochromique comprenant un ensemble de cellules de pixel, chaque cellule de pixel étant agencée pour afficher au moins un symbole, lequel au moins un symbole peut être commuté de manière répétée entre un état passant et un état bloqué, lequel état passant et lequel état bloqué présentent deux différents états de coloration visuellement détectables, dans lequel chaque cellule de pixel comprend :
une première couche (10) comprenant un matériau polymère organique électrochrome et électrochimiquement actif qui peut être commuté électrochimiquement entre lesdits deux états différents de coloration visuellement détectables,
une contre-électrode (40) comprenant un matériau électroconducteur
une couche d'électrolyte (30), lequel électrolyte est agencé spatialement entre, et en contact ionique avec, ladite première couche et ladite contre-électrode,
une couche de définition de symbole (20) qui est agencée électroniquement et ioniquement isolante en contact direct avec ladite première couche et laquelle couche de définition de symbole comprend une ou plusieurs ouvertures définissant la forme dudit symbole, dans lequel ladite couche d'électrolyte remplit lesdites ouvertures de ladite couche de définition de symbole,
une paire de connecteurs (57, 58), chaque connecteur étant en contact électronique avec un élément respectif de ladite première couche et de ladite contre-électrode,
dans lequel lesdites contre-électrodes dudit ensemble de cellules de pixel sont séparées électriquement les unes des autres, et
le dispositif comprend en outre :
un ensemble de circuits en contact électronique avec chaque connecteur de ladite paire de connecteurs de chaque cellule de pixel dudit ensemble de cellules de pixel, lequel ensemble de circuits est configuré pour être raccordé à une alimentation électrique et lequel ensemble de circuits est en outre configuré pour fournir de manière sélective une différence de potentiel respective entre ladite paire de connecteurs de chaque cellule de pixel dudit ensemble de cellules de pixel au moins lorsqu'il est raccordé à ladite alimentation électrique,
dans lequel ledit ensemble de circuits est en outre configuré pour détecter un changement de capacité dans au moins une cellule de pixel dudit ensemble de cellules de pixel, ledit changement de capacité étant provoqué par un objet externe à proximité immédiate de ladite au moins une cellule de pixel, et
commuter un sous-ensemble de cellules de pixel dudit ensemble de cellules de pixel entre l'un dudit état passant et dudit état bloqué et l'autre dudit état passant et dudit état bloqué, à la suite dudit changement de capacité dépassant un seuil prédéterminé, en fournissant ladite différence de potentiel respective entre chaque connecteur de ladite paire de connecteurs dudit sous-ensemble de cellules de pixel.

2. Dispositif selon la revendication 1, dans lequel ledit ensemble de circuits est configuré pour détecter ledit changement de capacité dans ladite au moins une cellule de pixel au moyen d'au moins un connecteur de ladite paire de connecteurs dudit ensemble de cellules de pixel.

3. Dispositif selon la revendication 1 ou 2, dans lequel
ledit ensemble de cellules de pixel comprend une pluralité de cellules de pixel, laquelle pluralité de cellules de pixel est regroupée en au moins un premier groupe de cellules de pixel et, facultativement, un second groupe de cellules de pixel,
chaque première couche dans ledit premier groupe de cellules de pixel forme une partie respective d'une couche continue respective, laquelle couche continue respective s'étend entre au moins deux cellules de pixel voisines dans ledit premier groupe de cellules de pixel ;
ledit connecteur en contact électronique avec ladite première couche desdites cellules de pixel dudit premier groupe de cellules de pixel est, facultativement, unique et le même pour lesdites au moins deux cellules de pixel voisines entre lesquelles ladite couche continue respective s'étend,
les premières couches respectives des cellules de pixel dudit second groupe sont séparées électriquement les unes des autres,
chaque dit connecteur en contact électronique avec ladite première couche des cellules de pixel dudit second groupe est un connecteur séparé.

4. Dispositif selon la revendication 3, dans lequel
ledit premier groupe de cellules de pixel comprend toutes les cellules de pixel dans ladite pluralité de cellules de pixel et toutes les premières couches dans ledit premier groupe de cellules de pixel forment une partie respective de la même couche continue, laquelle couche continue s'étend en continu entre toutes les cellules de pixel dans ladite pluralité de cellules de pixel ;
ledit connecteur en contact électronique avec ladite première couche est, de préférence, unique et le même pour toutes les cellules de pixel dans ladite pluralité de cellules de pixel.

5. Dispositif selon la revendication 1 ou 2, dans lequel
ledit ensemble de cellules de pixel comprend une pluralité de cellules de pixel, et
les premières couches respectives de ladite pluralité de cellules de pixel sont séparées électriquement les unes des autres, et
chaque dit connecteur en contact électronique avec ladite première couche de chaque cellule de pixel est un connecteur distinct.

6. Dispositif selon l'une quelconque des revendications précédentes, dans lequel :
pour chaque cellule de pixel dudit ensemble de cellules de pixel, une première borne et une seconde borne dudit ensemble de circuits sont raccordées électroniquement à un connecteur de ladite paire de connecteurs de ladite cellule de pixel, ladite première borne étant raccordée audit un connecteur au moyen d'une résistance, et
ledit ensemble de circuits est configuré pour :
à un premier instant donné t₀, fournir un premier potentiel à ladite seconde borne et un deuxième potentiel, différent dudit premier potentiel, à ladite première borne,
mesurer le potentiel au niveau de ladite seconde borne tout en maintenant ledit deuxième potentiel au niveau de ladite première borne,
déterminer un temps écoulé T entre le premier instant donné t₀ et un second instant donné t₁, second instant donné t₁ auquel le potentiel mesuré au niveau de ladite seconde borne atteint un troisième potentiel prédéterminé, ledit troisième potentiel étant différent desdits premier et deuxième potentiels et dans l'intervalle entre lesdits premier et deuxième potentiels,
selon lequel ledit changement de capacité dépassant un seuil prédéterminé est détecté sur la base dudit temps écoulé T dépassant un seuil de temps prédéterminé.

7. Dispositif selon la revendication 6, dans lequel ledit ensemble de circuits est en outre configuré pour :
traiter ledit temps déterminé, pour chaque cellule de pixel dudit ensemble de cellules de pixel,
déterminer, sur la base dudit temps déterminé traité, si un changement de capacité dans une cellule de pixel dépasse ledit seuil prédéterminé.

8. Dispositif selon l'une quelconque des revendications 6 ou 7, dans lequel le certain connecteur de ladite paire de connecteurs de ladite cellule de pixel est le connecteur en contact électronique avec la première couche de ladite cellule de pixel.

9. Dispositif selon l'une quelconque des revendications 6 ou 7, dans lequel le certain connecteur de ladite paire de connecteurs de ladite cellule de pixel est le connecteur en contact électronique avec la contre-électrode de ladite cellule de pixel.

10. Dispositif selon l'une quelconque des revendications 6 à 9, dans lequel chaque certain connecteur respectif d'au moins deux cellules de pixel est raccordé à une première borne commune et à une seconde borne distincte respective dudit ensemble de circuits.

11. Dispositif selon l'une quelconque des revendications précédentes, dans lequel ledit ensemble de circuits comprend l'un d'un microcontrôleur ou d'un réseau de portes programmables sur site (FPGA).

12. Dispositif selon l'une quelconque des revendications précédentes, dans lequel ladite alimentation électrique comprend l'un d'une batterie, d'une cellule solaire, d'un supercondensateur, d'une connexion USB à partir d'un autre dispositif, d'une prise murale.

13. Dispositif selon l'une quelconque des revendications précédentes, dans lequel ladite première couche comprend un matériau choisi dans un groupe comprenant :
le poly(3,4-éthylènedioxythiophène) dopé avec de l'acide poly(styrènesulfonique) (PEDOT:PSS), des polythiophènes, la polyaniline, le polypyrrole et le PEDOT, déposé par polymérisation en phase vapeur sur un oxydant prédéposé, et/ou une combinaison de ceux-ci.

14. Dispositif selon l'une quelconque des revendications précédentes, dans lequel ladite contre-électrode comprend un matériau choisi dans un groupe comprenant : le PEDOT:PSS et du carbone.

15. Dispositif selon l'une quelconque des revendications précédentes, dans lequel ladite paire de connecteurs comprend un matériau choisi dans un groupe comprenant : l'argent, le PEDOT:PSS, et du carbone.
